# EUROPÄISCHE PATENTSCHRIFT

(11) **EP 1 802 788 B1**
(45) Veröffentlichungstag und Bekanntmachung des Hinweises auf die Patenterteilung: **19.06.2019**
(21) Anmeldenummer: 05768008.4
(22) Anmeldetag: 02.08.2005
(51) Int. Cl.: C23F 13/06

(54) **GALVANISCHES ANODEN-SYSTEM FÜR DEN KORROSIONSSCHUTZ VON STAHL UND VERFAHREN ZU DESSEN HERSTELLUNG**
GALVANIC ANODE SYSTEM FOR CORROSION PROTECTION OF STEEL AND METHOD FOR PRODUCTION THEREOF
SYSTEME ANODIQUE GALVANIQUE SERVANT A PROTEGER L'ACIER CONTRE LA CORROSION ET PROCEDE DE PRODUCTION DUDIT SYSTEME

(30) Priorität: 04.08.2004 AT 13442004
(43) Veröffentlichungstag der Anmeldung: 04.07.2007
(73) Patentinhaber: Schwarz, Wolfgang, 1080 Wien (AT)
(72) Erfinder: Schwarz, Wolfgang, 1080 Wien (AT)
(74) Vertreter: Müller Schupfner & Partner Patent- und Rechtsanwaltspartnerschaft mbB
(86) Internationale Anmeldenummer: PCT/AT2005/000304
(87) Internationale Veröffentlichungsnummer: WO 2006/012660

(56) Entgegenhaltungen:
- EP-A- 0 568 025
- US-A- 4 836 768
- US-A- 5 270 358
- US-A- 5 650 060
- US-A- 6 033 553
- US-B1- 6 402 933
- US-B1- 6 471 851

## Beschreibung

Die Offenlegung betrifft ein galvanisches Anodensystem für den Korrosionsschutz von Stahl, bestehend aus einem Festelektrolyten und einem auf den Festelektrolyten aufgeklebten oder in den Festelektrolyten eingebetteten galvanischen Anodematerial, vorzugsweise Zink und dessen Legierungen. Der Festelektrolyt ist gekennzeichnet durch eine hohe Ionenleitfähigkeit und enthält vorzugsweise mindestens einen anionischen und/oder kationischen Polyelektrolyten und/oder vorzugsweise mindestens eine Verbindung, die mit dem Anodenmaterial, vorzugsweise mit Zink, Komplexverbindungen bildet. Der Festelektrolyt wird durch das Auftragen eines Beschichtungsmittels, nämlich als wässrige Dispersion oder Suspension, auf den Stahl und/oder auf den mineralischen Untergrund, vorzugsweise auf Beton hergestellt. Das Anodenmaterial ist dadurch gekennzeichnet, dass es in Verbindung mit dem Festelektrolyten und dem zu schützenden Stahl ein galvanisches Element bildet, in dem der Stahl die Kathode bildet. Das galvanische Anodensystem ist weiter dadurch gekennzeichnet, dass das Anodenmaterial als Folie, Netz oder Gitter auf der Oberfläche des Festelektrolyten, vorzugsweise durch Aufkleben, aufgebracht wird und/oder in den Festelektrolyten eingebettet wird. Das Anodenmaterial kann auch durch thermisches Sprayen auf den Festelektrolyten aufgetragen oder in Pulverform, gegebenenfalls in Verbindung mit elektrisch leitfähigen Pigmenten und/oder Fasern in den Festelektrolyten eingebettet werden.

Korrosion der Stahlbewehrung ist eine der wesentlichsten Ursachen für erhöhte Unterhalts- und Reparaturkosten und in weiterer Folge für die Verkürzung der Nutzungsdauer von Betonbauten. Korrosion der Stahlbewehrung wird durch das Eindringen von Chloriden in die Betonüberdeckung und/oder durch Karbonatisierung der Betonüberdeckung verursacht. Kathodischer Korrosions-Schutz (KKS) hat sich als kosteneffektive, verlässliche und akzeptierte Methode für die Verhinderung der Korrosion der Stahlbewehrung etabliert. Grundsätzlich wird zwischen zwei KKS-Systemen unterschieden: (1) KKS mit Fremdstrom, bei dem von einer Stromversorgungseinheit, kontrolliert von einer Steuerungselektronik, das KKS-System, bestehend aus einer auf der Betonoberfläche oder im Betonbauteil installierten Anode und der Stahlbewehrung als Kathode, mit Gleichstrom versorgt wird. (2) Galvanischer KKS ohne Fremdstrom, bei dem die Anode mit der Stahlbewehrung ein galvanisches Element bildet, das den für den Korrosionsschutz der Stahlbewehrung erforderlichen Strom liefert.

Beim galvanischen KKS fungiert die Anode als Opferanode und wird langsam verbraucht. Als Anodematerial wird üblicherweise Zink und seine Legierungen verwendet. In EP 1 135 538 und in US 4 506 485 wird eine Methode beschrieben, bei der das Anodenmaterial mittels Flammensprayen oder Lichtbogensprayen auf die Betonoberfläche aufgetragen wird. In EP 668 373 A1 wird eine Methode beschrieben, bei der eine Zinkfolie, beschichtet mit einem ionenleitenden Gel, auf die Betonoberfläche aufgeklebt wird. Da die Anode während des Betriebes der KKS Anlage verbraucht wird, haben galvanische KKS-Systeme eine beschränkte Lebensdauer. Die Lebensdauer solcher galvanischer KKS-Anlagen liegt im Bereich von 10 bis 20 Jahren, abhängig von der auf die Betonoberfläche aufgetragenen Menge Zink und den lokal fließenden galvanischen Strömen.

Im Unterschied zu den galvanischen KKS-Systemen wird die Lebensdauer von KKS-Systemen mit Fremdstromversorgung nur durch die Beständigkeit der Anode gegenüber Verwitterung und gegenüber der Säureentwicklung an der Grenzfläche Anode/Beton bestimmt. Ein solches System ist zum Beispiel in EP 1 068 164 B1 beschrieben. KKS-Systeme mit Fremdstrom weisen gegenüber galvanischen KKS-Systemen den Vorteil auf, dass der für den Korrosionsschutz der Stahlbewehrung erforderliche Strom und die angelegte Spannung über die Stromversorgungs- und elektronischen Kontrolleinheit nahezu beliebig den Bedürfnissen des Korrosionsschutzes der Stahlbewehrung angepasst werden kann. Die Stromversorgungs- und elektronischen Kontrolleinheiten und die Elektroinstallation (elektrische Anschlüsse zu den Anoden, zur Stahlbewehrung und den Überwachungssensoren) sind jedoch kostspielig, Fremdstrom KKS-Systeme erfordern eine permanente Überwachung und Wartung.

Im Unterschied zu Fremdstrom-KKS-Systemen ist bei galvanischen KKS-Systemen die zwischen Anode und Kathode angelegte Spannung durch das galvanische Element, z.B. Zink/Bewehrungsstahl, vorgegeben. Der zwischen Anode und Kathode fließende Strom wird durch den elektrolytischen Widerstand zwischen Anode und Kathode bestimmt und kann extern nicht reguliert werden. Galvanische KKS-Systeme benötigen daher im Unterschied zu Fremstrom-KKS-Systemen keine externe Stromversorgung und der Aufwand für die Elektroinstallation, für elektronische Kontrolleinheiten, Wartung und Überwachung ist im Vergleich zu Fremstrom-KKS-Systemen vernachlässigbar gering.

Der elektrolytische Widerstand zwischen Anode und Kathode setzt sich aus dem Übergangswiderstand Anode/Beton, dem elektrolytischen Widerstand des Betons und dem Übergangswiderstand Beton/ Bewehrungsstahl zusammen. Wie allgemein bekannt, hängt der elektrolytische Widerstand des Betons sehr stark von der Betonfeuchte und in geringerem Masse vom Chloridgehalt des Betons ab. Charakteristisch für galvanische KKS-Systeme ist, dass sich an der Grenzfläche Anode/Beton Produkte der galvanischen Oxidation (anodischen Oxidation) bilden, z.B. Zinkoxide und Zinkhydroxide bei galvanischen Zinkanoden. Diese Produkte erhöhen den elektrolytischen Widerstand zwischen Anode und Kathode im Verlauf des Betriebes des galvanischen KKS (Passivierung des Zinks), vor allem in trockener Umgebung. Dies bedeutet, dass galvanische KKS-Systeme eine ausreichende Betonfeuchte erfordern. Dies trifft insbesondere auf galvanischen KKS-Systeme zu, bei denen die Anode mittels Flammensprayen oder Plasmasprayen, wie zum Beispiel in EP 1 135 538 oder US 4 506 485 beschrieben, auf die Betonoberfläche aufgetragen wird.

Mittels thermischem Sprayen auf die Betonoberfläche aufgetragene Beschichtungen aus Zink oder seinen Legierungen werden seit längerer Zeit erfolgreich für den kathodischen Korrosionsschutz von Betonkonstruktionen im Meerwasser, wie zum Beispiel Brückenbauteilen, eingesetzt. Die Betonbauteile enthalten auf Grund der Nähe zum Meerwasser genügend Feuchte um einen für den Korrosionsschutz der Stahlbewehrung ausreichenden Stromfluss zu gewährleisten.

In US 6 471 851 und WO 98/16670 wird die Imprägnierung der Betonoberfläche mit Feuchte-Retentionsmitteln vor oder nach dem Auftragen des Zinks mittels thermischen Sprayens vorgeschlagen. Die Feuchte-Retentionsmittel verhindern jedoch nicht die Bildung von passivierenden, den Stromfluss zur Stahlbewehrung vermindernden Zinkoxiden und Zinkhydroxiden. Wie die Erfahrung zeigt, müssen daher die Feuchte-Retentionsmittel wiederholt aufgetragen werden. Dies ist vor allem bei schwer zugänglichen Bauteilen mit erheblichen Kosten verbunden.

In US 6 022 469 wird ein galvanisches Anodensystem beschrieben, in dem die Bildung eines passivierenden Films durch die Verwendung eines alkalischen Elektrolyten zwischen Anode und Beton verhindert werden soll. Der Elektrolyt enthält Alkalihydroxide, mit dem der pH-Wert des Elektrolyten mindestens um 0,2 Einheiten oberhalb des pH-Wertes, bei dem Passivierung der Anode erfolgt, eingestellt wird. Wie dem Fachmann bekannt ist, bildet sich während des Betriebes der galvanischen Opferanode neben den passivierenden anodischen Oxidationsprodukten (Zinkoxid, Zinkhydroxide) eine dem Stromfluss äquivalente Menge Säure. Diese Säure neutralisiert die Alkalihydroxide im Elektrolyten, sodass die Verwendung von Alkalihydroxiden keine Lösung für einen dauerhaften Korrosionsschutz der Stahlbewehrung mittels galvanischem kathodischen Korrosionsschutz darstellt.

In EP 0 668 373 wird ein galvanisches Anodensystem beschrieben, das aus einer Zinkfolie besteht, die mit einem ionenleitfähigen elastischen druckempfindlichen Hydrogel beschichtet ist. Das Hydrogel enthält einen polymeren Klebstoff, einen Elektrolyten, z.b. Natriumchlorid gelöst in Wasser, und hydrophile Polymere. Die mit dem Hydrogel beschichtete Zinkfolie wird auf den Beton aufgeklebt und mit der Stahlbewehrung elektrisch kontaktiert. Dieses galvanische Anodensystem löst das Problem der variablen Betonfeuchte durch die Anordnung eines ionenleitfähigen Hydrogel-Elektrolyten mit hohem Wassergehalt (60 - 95%) zwischen der galvanischen Zinkanode und der Betonoberfläche. Dieses System hat jedoch den Nachteil, dass die Adhäsion der Anode zur Betonoberfläche nur schwach ausgeprägt ist. Bei eindringender Feuchte vom Beton her oder von den Seiten der Anode her nimmt das Hydrogel Wasser auf und die Adhäsion der Zinkfolie zum Hydrogel und die Adhäsion des Hydrogels zur Betonoberfläche geht verloren. Das galvanische Zink-Hydrogel-Anodensystem kann daher nur auf Bauteilen eingesetzt werden, die nicht permanenter Feuchte oder durchdringender Feuchte ausgesetzt sind. Die Herstellung des Hydrogels und die Herstellung des Zinkfolie/Hydrogel-Verbundmaterials ist sehr aufwendig und kostenintensiv. Die Erfahrung zeigt, dass die Zink-Hydrogel-Anode nur eine sehr beschränkte Lagerfähigkeit hat und nach wenigen Monaten Lagerung nur mehr beschränkt oder gar nicht mehr für den kathodischen Korrosionsschutz der Stahlbewehrung eingesetzt werden kann.

US 5,650,060 beschreibt ein System zum Korrosionschutz von in Beton eingebettetem Metall, welches ein auf die Betonoberfläche aufgebrachtes ionenleitendes Medium und eine darauf angebrachte Opferelektrode umfasst, wobei das ionenleitende Medium Mittel enthält, die einer Passivierung der Opferelektrode entgegenwirken sollen.

US 4,836,768 beschreibt einen Körper mit einer Substratoberfläche, welche ein korrodierbares Material umfasst und auf welcher eine Schutzschicht mit einer Antikorrosisionszusammensetzung vorhanden ist.

Aufgabe der vorliegenden Erfindung ist die Schaffung eines galvanischen Anodensystems, das sowohl in trockener als auch in feuchter Umgebung für den verlässlichen und dauerhaften Korrosionsschutz der Stahlbewehrung eingesetzt werden kann. Da im Bauwesen der Kostenfaktor für den Einsatz neuer Technologien entscheidend ist, sollte das galvanische Anodensystem kostengünstig herstellbar und anwendbar sein und eine nahezu unbeschränkte Lagerfähigkeit aufweisen.

Es zeigte sich überraschenderweise, dass durch das Verfahren gemäß Anspruch 1, nämlich die Beschichtung des Betons mit einer ionenleitfähigen Beschichtung und durch Einbettung eines geeigneten galvanischen Anodenmaterials, vorzugsweise Zink oder Legierungen des Zinks, in die ionenleitfähige Beschichtung oder durch Anbringen des Anodenmaterials auf der Oberfläche der ionenleitfähigen Beschichtung und die elektrische Kontaktierung des Anodenmaterials mit der Stahlbewehrung die gestellte Aufgabe gelöst werden konnte:
Die galvanische Anode für den kathodischen Korrosionsschutz der Stahlbewehrung besteht aus einer auf der Betonoberfläche aufgebrachten ionenleitfähigen Beschichtung, in die ein geeignetes Anodenmaterial eingebettet wird oder auf der ein geeignetes Anodenmaterial aufgebracht wird. Die ionenleitfähige Beschichtung wirkt als elektrolytische Brücke zwischen der Anode und dem zu schützenden Stahl oder dem Material, zum Beispiel Beton, in dem der zu schützende Stahl eingebettet ist. Im Unterschied zu Elektrolytlösungen oder Elektrolytgelen wirkt die ionenleitfähige Beschichtung als Festelektrolyt, wobei der Festelektrolyt auch elastisch sein kann.

Als Anodenmaterial sind Materialien geeignet, die, aufgebracht auf der ionenleitfähigen Beschichtung und elektrisch verbunden mit der Stahlbewehrung, ein galvanisches Element bilden, derart dass die Stahlbewehrung die Kathode bildet, wobei bei Unterbrechung der elektrischen Verbindung zwischen dem Bewehrungsstahl und dem Anodenmaterial ein Potentialunterschied von mindestens 0,2 Volt, vorzugsweise von mindestens 0,4 Volt gemessen wird. Als Anodenmaterialen sind z.B. Zink, Aluminium, Magnesium, und deren Legierungen geeignet. Mit Zink und Zinklegierungen, zum Beispiel Zink/Aluminiumlegierungen als Anodenmaterial wurden die besten Ergebnisse erzielt.

Die ionenleitfähige Beschichtung ist durch eine hohe dauerhafte Ionenleitfähigkeit gekennzeichnet, wobei die Ionenleitfähigkeit mindestens 0,01 Milli-Siemens, vorzugsweise 0,1 bis 10 Milli-Siemens beträgt. Die hohe Ionenleitfähigkeit wird vorzugsweise durch die Beimengung von Polyelektrolyten erzielt. Als Polyelektrolyten sind Verbindungen geeignet die elektrostatisch Kationen und/oder Anionen binden können. Als elektrostatische Bindung wird eine Ionenbindung bezeichnet, wie sie zum Beispiel für Salze charakteristisch ist. Besonders geeignet sind Polyelektrolyte die als Ionentauscher wirken, für Kationen anionische Polyelektrolyte wie zum Beispiel Polysulfonsäuren, Polycarboxylsäuren, Polyphosphonsäuren, Polyphosphorsäuren, Alumo-Silikate, und für Anionen kationische Polyelektrolyten wie zum Beispiel Polyimine, Polyamine, Polyammoniumverbindungen. Die Polyelektrolyte sind in dem ionenleitfähigen Beschichtungsmittel gelöst. Besonders gute Ergebnisse wurden erzielt, wenn der ionenleitfähigen Beschichtung sowohl anionische als auch kationische Polyelektrolyte beigemengt wurden oder wenn sogenannte amphotere Polyelektrolyte verwendet wurden. Amphotere Polyelektrolyte enthalten sowohl anionische als auch kationische funktionelle Gruppen und können daher sowohl Anionen als auch Kationen ionisch binden.

Die Ionenleitfähigkeit der Beschichtung kann durch Beimengung von Salzen, wie zum Beispiel Alkalisalze und/oder Erdalkalisalze der Salzsäure, Schwefelsäure, Salpetersäure, Essigsäure und durch Beimengung von Alkalihydroxiden erhöht werden.

Überraschenerweise zeigte sich, dass die Dauerhaftigkeit und Wirksamkeit des kathodischen Korrosionsschutzes mittels der erfindungsgemäßen galvanischen Anode deutlich verbesserte, wenn der ionenleitfähigen Beschichtung Verbindungen beigemengt wurden, die mit dem Anodenmaterial Komplexverbindungen (auch als Chelate bezeichnet) bilden, wie zum Beispiel Ethylendiammintetraessigsäure (EDTA), Imminodiessigsäure, Nitrilotriessigsäure, Citronensäure, Bernsteinsäure, Weinsäure, Polyacrylsäuren, Aminophosphonsäuren, und deren Salze, vorzugsweise deren Alkalisalze, Hydroxychinolin und dessen Derivate, Diethylenglykol, Polyethylenglykol, Glyzerin, Guanidine und dessen Salze, Benzimidazol, Aminoalkohole, Polyethyleneimine, Polyvinylpyrrolidone.

Eine besondere erfindungsgemäße Ausführung der ionenleitfähigen Beschichtung enthält Polyelektrolyte, die das Anodenmaterial komplexierende funktionelle Gruppen enthalten. Wenn Zink als Anodenmaterial verwendet wurde, wurden zum Beispiel besonders gute Ergebnisse durch Beimengung von Polyelektrolyten, die zum Beispiel Phosphonsäure-, Aminophosphonsäure-, Ammonium-, Amin-, Imin-Gruppen enthalten, erzielt.

Dem Beschichtungsmittel können zur Verbesserung der Stabilität und Konsistenz Dispergiermittel, Netzmittel, Haftvermittler, Wasserretentionsmittel, Gelbildner, Verdickungsmitel, Füllstoffe wie zum Beispiel Quarzsand, feingemahlene Schlacke, Steinmehl, Flugasche, Mikrokugeln aus Glas, etc. beigemengt werden. Dem ionenleitfähigen Beschichtungsmittel können zur Verbesserung der Stabilität, Konsistenz und Haftung auf dem Untergrund und zur Verbesserung der Haftung des Anodenmaterials Kunstharzdispersionen wie zum Beispiel Polyacrylate, Polystyrol, Butadien-Styrolcopolymere, Polyether, Polyketone, Latex, carboxylierte Styrol-Butadien-Copolymere, Phenolharze, Epoxyharze, Chloropren etc. beigemengt werden.

Eine besondere Ausführung des Beschichtungsmittels enthält für die Verbesserung der Haftung auf Beton In-Situ gebildete Alumo-Silikate wie sie in EP 1 068 164 beschrieben werden, wobei die Alumo-Silikate nicht nur die Haftung auf Beton oder Stahl sondern auch die Ionenleitfähigkeit der Beschichtung als anionische Polyelektrolyten erhöhen.

Das Beschichtungsmittel wird vorzugsweise als wässrige Dispersion durch Vermischen der Komponenten hergestellt und mittels üblicher Beschichtungstechniken wie zum Beispiel Rollen, Spritzen, Spachteln auf den Untergrund, zum Beispiel auf die Betonoberfläche, aufgetragen. Der Untergrund wird vor dem Auftragen des Beschichtungsmittels gereinigt und gegebenenfalls aufgeraut, vorzugsweise durch Sand-, Schlacken-, Feuchtschlacken, Hochdruckwasser-Strahlen.

Das galvanische Anodensystem wird durch das Einbetten oder Aufbringen eines geeigneten Anodenmaterials auf die ionenleitfähige Beschichtung hergestellt.

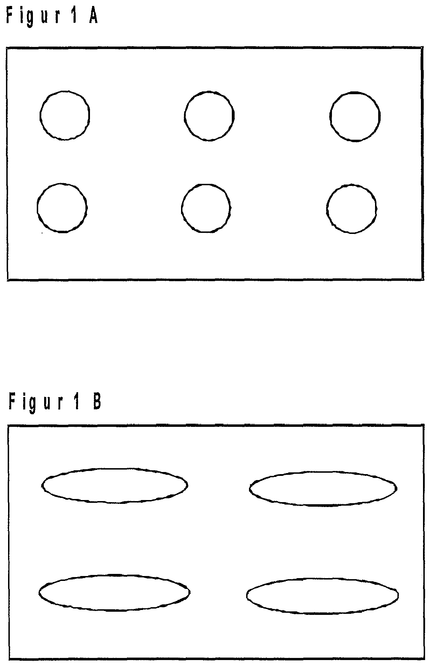

Das Einbetten des Anodenmaterials in die ionenleitfähige Beschichtung erfolgt zum Beispiel durch das Befestigen des Anodenmaterials als Netz oder Gitter auf dem Untergrund und durch das Auftragen des Beschichtungsmittels durch Aufspritzen. Das Anodennetze oder Anodengitter kann auch durch Aufspachteln oder Aufrollen des Beschichtungsmittels eingebettet werden. Eine weitere Ausführung der Herstellung des galvanischen Anodensystems besteht zum Beispiel darin, dass zuerst eine Lage des Beschichtungsmittels aufgetragen wird, darauf das Anodenmaterial aufgetragen wird und das Anodenmaterial in eine zweite Lage des Bindemittels eingebettet wird. Für die letztere Ausführung des Einbettens eignet sich zum Beispiel auch gelochte Anodenfolien (Figur 1a) oder gestreckte gelochte Folien (Figur 1b).

Überraschenderweise zeigte sich, dass durch das Einmischen von faserförmigem Anodenmaterial, vorzugsweise Fasern aus Zink und/oder seinen Legierungen, in die Bindemitteldispersion und das Auftragen der die Zinkfasern enthaltenden Bindemitteldispersion durch Aufrollen, Spachteln, vorzugsweise durch Aufspritzen auf den Untergrund, zum Beispiel auf Beton, sehr gute Resultate erzielt wurden. Zum Beispiel wurden Zinkfasern, die aus Zinkdrähten mit einem Durchmesser von 0,1 mm durch Abschneiden auf eine Länge von 0,5 bis 2 mm hergestellt wurden, in die Bindemitteldispersion mittels Einrühren eingemischt und auf einen Betonuntergrund mittels Airless Sprayen auf eine Schichtdicke 2 mm aufgetragen. Nach dem Trocknen und Aushärten der Beschichtung sollte der elektrische Schichtwiderstand maximal 500 Ohm, vorzugsweise maximal 100 Ohm betragen.

Das Einmischen von pulverförmigen galvanischen Anodenmaterials in das Beschichtungsmittel ergab ebenfalls zufriedenstellende Ergebnisse. Überraschenderweise zeigte sich jedoch, dass pulverförmiges galvanischen Anodenmaterial in Verbindung mit einem pulverförmigen elektrisch leitfähigen Material, wie zum Beispiel Graphitpulver, Kohlenstoffruß, Nickelpulver und/oder in Verbindung mit einem inerten faserförmigen Material, zum Beispiel Kohlefasern, Graphitfasern, mit Nickel beschichteten Kohlefasern, mit Nickel beschichtete Graphitfasern, eingemischt in das Beschichtungsmittel, sehr gute Resultate in Bezug auf einen dauerhaften galvanischen Korrosionsschutz von Stahl ergab. Nach dem Trocknen und Aushärten der Beschichtung sollte der elektrische Schichtwiderstand maximal 500 Ohm, vorzugsweise maximal 100 Ohm betragen. Eine galvanische Korrosion des Stahls nach dem Verbrauch des galvanischen Anodenmaterials sollte durch das Anlegen einer Spannung von mindestens 0,2 Volt, vorzugsweise von mindestens 0,5 Volt zwischen Anode und dem Stahl verhindert werden.

Die elektrische Kontaktierung der ionenleitfähigen Beschichtung, faserförmiges und/oder pulverförmiges Anodenmaterial enthaltend, zum Bewehrungsstahl wird wie für leitfähige Beschichtungen üblich (EP 1 068 164) hergestellt, zum Beispiel mittels in die ionenleitfähige Beschichtung eingebettete mit Niobium ummantelte und mit Platin beschichtete 0,8 mm starke Drähte, es können zum Beispiel auch Drähte oder Bänder aus Zink, Titan, mit Metallen oder Metalloxiden beschichtetes Titan, Bänder oder Filamente aus Kohle- oder Graphitfasern verwendet werden. Die elektrische Verbindung zum Stahl kann zum Beispiel auch durch eine ausreichend Anzahl von Metallstiften hergestellt werden.

Das galvanische Anodensystem kann, wie oben beschrieben, auch durch das Aufbringen des Anodenmaterials, vorzugsweise in Form einer Folie, einer gelochten Folie (Figur 1a) oder einer mit Löchern versehenen und gestreckten Folie (Figur 1b) auf dem ionenleitfähigen Beschichtung hergestellt werden. Um eine ausreichende und dauerhafte Haftung der Folie auf der ionenleitfähigen Beschichtung herzustellen, werden dem Beschichtungsmittel geeignete Haftvermittler, wie zum Beispiel Polyalkylacrylsäure, deren Salze und/oder Ester, Polyalkylacrylcyanate, dispergierbare Expoxidharze, Polyimine, Methylcellulosen und deren Derivate, zugemischt.

Eine weitere erfindungsgemäße Ausführung besteht darin, dass vor dem Anbringen des Anodenmaterials auf der ionenleitfähigen Beschichtung eine Dispersion oder Lösung, zumindest einen der oben beschriebenen Haftvermittler enthaltend, aufgebracht wird.

Das auf der ionenleitfähigen Beschichtung angebrachte Anodenmaterial kann mittels geeigneter Dübel, Nägel, Schrauben, aus Kunststoff oder Metall zusätzlich mechanisch fixiert werden, wobei über eine metallische Fixierung eine direkte elektrische Verbindung zum vor Korrosion zu schützenden Stahl hergestellt werden kann.

Eine weitere Ausführung der Herstellung der galvanischen Anode besteht in dem Auftragen eines Filmes, bestehend aus dem Anodenmaterial, vorzugsweise Zink oder seine Legierungen, mittels thermischem Sprayen, zum Beispiel Flammensprayen oder Plasmasprayen.

Es zeigte sich überraschenderweise, dass sich die Dauerhaftigkeit und die Wirksamkeit von galvanischen Zinkanoden, die mittels thermischem Aufsprayen von Zink auf die Betonoberfläche hergestellt werden, wie zum Beispiel in EP 1 135 538 oder US 4 506 485 beschrieben, durch die Imprägnierung der Betonoberfläche vor dem Aufsprayen des Zinks mittels einer Lösung, die mindestens eine Verbindung enthält, die mit Zink wasserlösliche Chelate bildet, zum Beispiel Ethylendiammintetraessigsäure (EDTA), Imminodiessigsäure, Nitrilotriessigsäure, Citronensäure, Bernsteinsäure, Weinsäure, Polyacrylsäuren, Aminophosphonsäuren, und deren Salze, vorzugsweise deren Alkalisalze, Hydroxychinolin und dessen Derivate, Diethylenglykol, Polyethylenglykol, Glyzerin, Guanidine und dessen Salze, Benzimidazol, Aminoalkohole, Polyethylenimine, Polyvinylpyrrolidone, sehr stark verbessern lässt. Durch die Bildung von löslichen Zinkchelaten wird die Bildung einer Passivschicht an der Grenzfläche der Zinkanode zum Beton verhindert. In US 6 022 469 wird für die Verhinderung der Bildung einer die Funktionsweise der galvanischen Anode beeinträchtigenden Passivschicht mittels eines Elektrolyten beschrieben, dessen pH-Wert um mindestens 0,2 Einheiten oberhalb des pH-Wertes liegt, bei dem Passivierung erfolgt. Der pH-Wert des Elektrolyten liegt zum Beispiel für Zink bei > 13,3.

Wird die Betonoberfläche jedoch mit einer Verbindung imprägniert, die mit Zink in Wasser lösliche Chelate bildet, so wird auch bei deutlich niedrigeren pH-Werten, z.B. bei pH 12,6 (dem pH-Wert der Porenlösung von nicht-karbonatisiertem Beton) die Bildung einer Passivschicht verhindert. Erfindungsgemäß in Wasser lösliche Polyelektrolyte, die mit dem Anodenmaterial Chelate bilden, zum Beispiel Polyaminophosphonsäuren, und deren Salze, Polyamine und oder Polyimine, eingesetzt. Eine weitere Verbesserung der Wirksamkeit und Dauerhaftigkeit von auf die Betonoberfläche aufgesprayten Anoden wird durch eine zusätzliche Imprägnierung des Betons mittels in Wasser löslicher In-Situ gebildeter Alumo-Silikate erzielt, wie sie in EP 1 068 164 beschrieben sind.

Die galvanische Anode kann auch direkt auf dem zu schützenden Stahl appliziert werden. Dies hat insbesondere den Vorteil, dass Stahlkonstruktionen auch in einem Umfeld, in dem kein offenes Feuer verwendet werden kann und nachträgliches Feuerverzinken mittels thermischen Sprayens ausgeschlossen ist, wie zum Beispiel in Raffinerien oder Pipelines, verlässlich und dauerhaft vor Korrosion geschützt werden können.

Ein weiterer Vorteil des galvanischen Anodensystems besteht darin, dass die Wirkungsdauer des Anodensystems zum Beispiel durch erneutes Aufkleben von Anodenmaterial oder durch thermisches Aufsprayen des Anodenmaterials auf den Festelektrolyten beliebig oft verlängert werden kann.

### BEISPIEL 1

Es wurden 2 Mörtelprüfplatten (20^{∗}20^{∗}2 cm, 320 kg Portlandzement/m³, Flusssand 0/5mm, w/c=0,56, 3 % Chlorid pro Zementgewicht, zugemischt als im Anmachwasser gelöstes Natriumchlorid), die in der Mitte ein Gitter aus Bewehrungsstahl (Maschenweite 1 cm, 3 mm Durchmesser der Stahlstäbe) enthielten, hergestellt.

Die Mörtelprismen wurden 28 Tage bei 95% rel. Feuchte gelagert und dann weitere 2 Monate der Witterung ausgesetzt.

| **Tabelle** 1: Komponente A: Inhaltsstoff | Gewichts-Teile |
|---|---|
| Polybutylacrylat-Acrylsäure-Copolymer, Natriumsalz | 65,8 |
| Polyethylenimin | 95,6 |
| Poly-Styrol-Butylacrylat-Acrylsäure Copolymer | 77,5 |
| Methylcellulose | 6,5 |
| Polyoxyethylensulfonat, Natriumsalz | 4,5 |
| Lithiumchlorid | 22,5 |
| Metakaolin | 62,2 |
| Quarzmehl (0-0,25 mm) | 432,8 |
| Deonisiertes Wasser | 232,6 |
| Summe | 1000 |

Für die Herstellung des ionenleitfähigen Beschichtungsmittels wurden die in Tabelle 1 aufgelisteten Komponenten in einem Zwangsmischer durch Rühren vermischt. 1000 Teile der derart hergestellte Dispersion (Komponente A) wurden mit 160 Teilen Kaliwasserglas K35 (Komponente B), 26% SiO₂ und 17% K₂O enthaltend, vermischt.

100 g des so hergestellten Beschichtungsmittels wurden mittels Roller auf eine Mörtelprüfplatte aufgetragen. Nach ca. 2 Stunden, nachdem die Dispersion auf den Mörtelprüfplatten steif wurde und zu erhärten begann, wurde eine Zinkfolie (Durchmesser 0,25 mm) aufgeklebt und mit einem Tapetenroller auf die Beschichtung aufgepresst.

Nach dem Aushärten des Beschichtungsmittels nach ca. 12 Stunden wurde eine Kupferlitze an die Zinkfolie angelötet. Der Spannungsunterschied zwischen Zinkfolie und dem in der Mörtelprüfplatte eingebetteten Stahlgitter betrug anfänglich 0,87 Volt und stabilisierte sich nach ca. 12 Stunden bei ca. 0,67 Volt. Der Kupferlitzendraht wurde über einen 1 Ohm Widerstand mit dem Stahlnetz elektrisch verbunden. Über den gemessenen Spannungsabfall am 1 Ohm Widerstand wurde der zwischen der Zinkfolie und dem Stahlnetzgitter fließende Strom gemessen. Der Stromfluss betrug anfänglich 0,56 mA (14 mA/m²) und stabilisierte sich nach ca. 12 Stunden bei 0,30 mA (7,5 mA/m²). An der der Zinkfolie gegenüberliegenden Seite der Mörtelprüfplatte wurde das Potential des Stahlnetzes gegen eine aufgepresste Kupfer/Kupfersulfat-Elektrode (CSE) gemessen. Das Potential des Stahlnetzes vor der Herstellung der elektrischen Verbindung betrug - 397 mV, nach der Herstellung der elektrischen Verbindung stabilisierte sich das Potential der Stahlbewehrung bei ca. - 760 mV.

Die Prüfplatten wurden in einer klimatisierten Kammer bei 75% relativer Feuchte und Umgebungstemperatur (ca. 22°C) gelagert. Der Stromfluss zwischen Zinkfolie (Zinkanode) und dem Stahlnetz (Kathode) wurde in Abständen von 1 Stunde elektronisch aufgezeichnet und auf einem PC gespeichert.

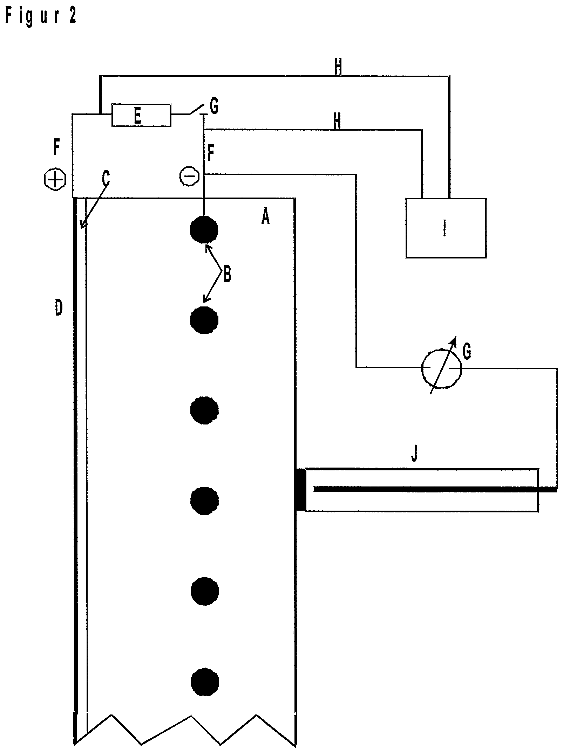

Die Prüf- und Messanordnung ist in Figur 2 schematisch dargestellt: Auf der Mörtelprüfplatte (A), in die das Stahlgitter (B) eingebettet ist, ist die ionenleitfähige Beschichtung (C) aufgetragen, auf der die Zinkfolie (D) aufgeklebt ist. Die Zinkanode (D) ist mit dem Bewehrungsnetz (B) über einen 1 Ohm Widerstand (E) über Kupferlitzendrähte verbunden. Die elektrische Verbindung kann über einen Schalter (G) unterbrochen werden. Der Potentialunterschied zwischen der Zinkanode (D) und dem Stahlnetz (B) wird mit einer Datenerfassungsanlage (I) aufgezeichnet. Der Potentialunterschied entspricht gemäss dem Ohmschen Gesetz dem zwischen Zinkanode (D) und Stahlnetz (B) fließenden elektrischen Strom. Das elektrochemische Potential der Stahlbewehrung wird gegenüber einer CSE-Elektrode (J) mit einem Voltmeter (G) mit 10 MOhm Eingangsimpedanz gemessen.

Die über einen Zeitraum von einem Jahr gemessenen Werte des Stromflusses zwischen Zinkanode und Stahlnetz sind in Tabelle 2 zusammengefasst.

**Tabelle 2**

| Zeit in Tagen | gemessener Stromfluss [mA] | Stromfluss/m² Anode [mA/m²] |
|---|---|---|
| 0 | 0,56 | 14,0 |
| 1 | 0,28 | 7,0 |
| 10 | 0,25 | 6,3 |
| 30 | 0,20 | 5,0 |
| 60 | 0,19 | 4,8 |
| 90 | 0,20 | 5,0 |
| 180 | 0,18 | 4,5 |
| 360 | 0,20 | 5,0 |

Der Stromfluss zwischen Zinkanode und Stahlnetzkathode stabilisiert sich nach ca. 30 Tagen und bleibt über den Messzeitraum nahezu konstant. Eine Erhöhung des Elektrolytwiderstandes auf Grund der Passivierung der Zinkanode findet somit nicht statt. Nach 30, 90 und 270 Tagen wurde der Potentialabfall der Stahlbewehrung gegenüber einer CSE-Elektrode nach der Unterbrechung des Stromflusses zwischen Zinkanode und Stahlnetz nach EN 12696 bestimmt. Die 24 Stunden nach der Unterbrechung des Stromflusses gemessenen Werte lagen mit 170 mV, 145 mV und 149 mV deutlich oberhalb des in der EN 12696 vorgegebenen Kriteriums von 100 mV. Das Stahlgitter war somit deutlich vor Korrosion geschützt.

Die unbeschichtete und unbehandelte Referenz-Mörtelprüfplatte zeigte nach einem Jahr deutliche Schäden (Rissbildung im Mörtel, Bildung von Rostfahnen) auf Grund der durch das Chlorid im Mörtel hervorgerufenen Stahlkorrosion.

### BEISPIEL 2

Es wurden wie in Beispiel 1 beschrieben, zwei Mörtelprüfplatten hergestellt. Das ionenleitfähigen Beschichtungsmittels wurde, wie in Beispiel 1 beschrieben, durch Vermischen der Komponente A, bestehend aus der in Tabelle 3 aufgelisteten Komponenten, mit Kaliwasserglas K35 im Verhältnis von 1000/165 Teilen hergestellt.

Auf der Oberfläche der Mörtelprüfkörper wurde mit Polypropylenklammern ein Zinknetz (Maschenweite 4 mm, Drahtstärke 0,8 mm) fixiert. Das Zinknetz wurde durch Auftragen von je 150 g des durch Vermischen von Komponente A mit Komponente B hergestellten Beschichtungsmittels mittels Airless Spray Verfahren eingebettet.

Nach dem Aushärten des Beschichtungsmittels nach ca. 12 Stunden wurde eine Kupferlitze an das Zinknetz angelötet. Der Spannungsunterschied zwischen dem Zinknetz und dem in den beiden Mörtelprüfplatte eingebetteten Stahlnetz betrug anfänglich 0,84 Volt in Platte 1, 0,87 Volt in Platte 2 und stabilisierte sich nach ca. 12 Stunden bei ca. 0,65 Volt (Platte1) und bei ca. 0,63 Volt (Platte 2). Der Kupferlitzendraht wurde wie in Beispiel 1 beschrieben, über einen 1 Ohm Widerstand mit dem Stahlnetz elektrisch verbunden und der zwischen dem Zinknetz und dem Stahlgitter fließende Strom gemessen. Der Stromfluss betrug anfänglich 0,60 mA (15 mA/m² Betonoberfläche) in Platte 1 und 0,62 mA (15,5 mA/m² Betonoberfläche) und stabilisierte sich nach ca. 12 Stunden bei 0,32 mA (8 mA/m²) in Platte 1 und bei 0,34 mA (8,6 mA/m²) in Platte 2. Das Potential des Stahlnetzes vor der Herstellung der elektrischen Verbindung betrug - 384 mV vs. CSE in Platte 1 und - 392 mV vs. CSE in Platte 2, nach der Herstellung der elektrischen Verbindung stabilisierte sich das Potential der Stahlbewehrung bei ca. - 778 mV in Platte 1 und bei - 785 mv in Platte 2.

Die Prüfplatten wurden in einer klimatisierten Kammer bei 75% relativer Feuchte und Umgebungstemperatur (ca. 22°C) gelagert. Der Stromfluss zwischen Zinkfolie (Zinkanode) und dem Stahlnetz (Kathode) wurde wie in Beispiel 1 beschrieben gemessen und aufgezeichnet. Nach einem Messzeitraum von 30 Tagen wurde die Platte 2 in der Klimakammer in einem Becken auf der der galvanischen Anode abgewandten Seite ca. 5 mm in stehendes Wasser getaucht. Nach ca. 1 Woche wurde das Wasser bis zur Grenzfläche Mörtelplatte/galvanische Anode hochgesaugt.

Die über einen Zeitraum von einem halben Jahr gemessenen Werte des Stromflusses zwischen Zinkanode und Stahlnetz sind in Tabelle 4 zusammengefasst.

| **Tabelle 3:** Komponente A: Inhaltsstoff | Gewichts-Teile |
|---|---|
| Aminomethylenpolyphosphonsäure, Natriumsalz | 112,7 |
| Poly-Butylacrylat | 100,0 |
| Methylcellulose | 10,1 |
| Polyoxyethylenglykoläther | 13,6 |
| Lithiumnitrat | 28,2 |
| Metakaolin | 64,5 |
| Quarzmehl (0-0,25 mm) | 427,3 |
| Deonisiertes Wasser | 243,6 |
| Summe | 1000 |

**Tabelle 4**

| ***Zeit in Tagen*** | ***Platte 1*** | | ***Platte 2*** | |
|---|---|---|---|---|
| | gemessener Stromfluss [mA] | Stromfluss/m² [mA/m² ] | gemessener Stromfluss [mA] | Stromfluss/m² [mA/m² ] |
| 0 | 0,60 | 15,0 | 0,62 | 15,5 |
| 1 | 0,34 | 9,0 | 0,34 | 8,8 |
| 10 | 0,25 | 7,2 | 0,25 | 7,0 |
| 30 | 0,20 | 6,0 | 0,2 | 6,3 |
| 60 | 0,19 | 5,5 | 0,19 | 9,0 |
| 90 | 0,20 | 5,3 | 0,2 | 8,8 |
| 180 | 0,18 | 5,4 | 0,18 | 8,9 |

Der Stromfluss zwischen Zinkanode und Stahlnetzkathode stabilisiert sich analog zu der in Beispiel 1 beschriebenen auf die ionenleitfähige Beschichtung aufgeklebten Zinkanode nach ca. 30 Tagen und bleibt in der Mörtelprüfplatte 1 über den Messzeitraum von einem halben Jahr nahezu konstant. Die Durchfeuchtung der Mörtelprüfplatte 2 bewirkt eine deutliche Erhöhung des Stromflusses: Die Durchfeuchtung des Mörtels erniedrigt den Betonwiderstand und erhöht damit den Stromfluss.

Wie in Beispiel 1 wurde keine Erhöhung des Elektrolytwiderstandes auf Grund der Passivierung der Zinkanode beobachtet. Nach 30, 90 und 180 Tagen wurde der Potentialabfall der Stahlbewehrung gegenüber einer CSE-Elektrode nach der Unterbrechung des Stromflusses zwischen Zinkanode und Stahlnetz nach EN 12696 bestimmt. Die 24 Stunden nach der Unterbrechung des Stromflusses gemessenen Werte lagen für Platte 1 mit 185 mV, 156 mV und 152 mV und für Platte 2 mit 147 mV, 129 mV und 127 mV deutlich oberhalb des in der EN 12696 vorgegebenen Kriteriums von 100 mV. Das Stahlgitter war somit deutlich vor Korrosion geschützt. Das Beispiel zeigt, dass mit der galvanischen Anode die Stahlbewehrung auch in stark durchfeuchtete Bauteilen vor Korrosion geschützt werden kann, im Unterschied zu dem galvanischen Anodensystem, bei dem die Zinkfolie, versehen mit einer klebenden Hydrogelschicht (EP 0 668 373), sich von dem Betonuntergrund infolge der Wasseraufnahme durch das Hydrogel lösen würde.

### BEISPIEL 3

Es wurden wie in Beispiel 1 beschrieben, zwei Mörtelprüfplatten hergestellt. Das ionenleitfähige Beschichtungsmittel wurde, wie in Beispiel 1 beschrieben, durch Vermischen der Komponente A, bestehend aus den in Tabelle 5 aufgelisteten Komponenten, mit Kaliwasserglas K35 im Verhältnis von 1000/120 Teilen hergestellt.

Auf der Oberfläche der Mörtelprüfkörper wurde mit Polypropylenklammern ein Zinknetz (Maschenweite 4 mm, Drahtstärke 0,8 mm) fixiert. Das Zinknetz wurde durch Auftragen von je 200 g des durch Vermischen von Komponente A mit Komponente B hergestellten Beschichtungsmittels mittels Airless Spray Verfahren eingebettet.

Nach dem Aushärten des Beschichtungsmittels nach ca. 24 Stunden wurde eine Kupferlitze an das Zinknetz angelötet. Der Spannungsunterschied zwischen dem Zinknetz und dem in den beiden Mörtelprüfplatten eingebetteten Stahlnetz betrug anfänglich 0,82 Volt in Platte 1, 0,85 Volt in Platte 2 und stabilisierte sich nach ca. 12 Stunden bei ca. 0,63 Volt (Platte 1) und bei ca. 0,61 Volt (Platte 2). Der Kupferlitzendraht wurde wie in Beispiel 1 beschrieben, über einen 1 Ohm Widerstand mit dem Stahlnetz elektrisch verbunden und der zwischen dem Zinknetz und dem Stahlgitter fließende Strom gemessen. Der Stromfluss betrug anfänglich 0,75 mA (19 mA/m² Betonoberfläche) in Platte 1 und 0,72 mA (18 mA/m² Betonoberfläche) und stabilisierte sich nach ca. 12 Stunden bei 0,43 mA (11 mA/m²) in Platte 1 und bei 0,38 mA (9,5 mA/m²) in Platte 2. Das Potential des Stahlnetzes vor der Herstellung der elektrischen Verbindung betrug -397 mV vs. CSE in Platte 1 und -405 mV vs. CSE in Platte 2, nach der Herstellung der elektrischen Verbindung stabilisierte sich das Potential der Stahlbewehrung bei ca. -783 mV in Platte 1 und bei -765 mv in Platte 2.

Die Prüfplatten wurden in einer klimatisierten Kammer bei 75% relativer Feuchte und Umgebungstemperatur (ca. 22°C) gelagert. Der Stromfluss zwischen Zinkfolie (Zinkanode) und dem Stahlnetz (Kathode) wurde wie in Beispiel 1 beschrieben gemessen und aufgezeichnet.

Die über einen Zeitraum von einem halben Jahr gemessenen Werte des Stromflusses zwischen Zinkanode und Stahlnetz sind in Tabelle 6 zusammengefasst.

| **Tabelle 5:** Komponente A: Inhaltsstoff | Gewichts-Teile |
|---|---|
| Poly-Butyl-Styrolacrylat | 270 |
| Isotridecanolethoxylate | 1,7 |
| Dodecanolethoxylate | 1,7 |
| Poly-Ethyleneimine 50% Lösung | 70 |
| Polystyrolsulfonsäure 50% Lösung | 70 |
| Butylglykol | 30 |
| Polyglykol MW 600 | 13,6 |
| Deonisiertes Wasser | 73 |
| Polyvinylpyrrolidon 20% Lösung | 70 |
| Metakaolin | 100 |
| Kalksteinmehl < 30 µm | 300 |
| Summe | 1000 |

**Tabelle 6**

| ***Zeit in Tagen*** | ***Platte1*** | | ***Platte 2*** | |
|---|---|---|---|---|
| | gemessener Stromfluss [mA] | Stromfluss/m² [mA/m²] | gemessener Stromfluss [mA] | Stromfluss/m² [mA/m²] |
| 0 | 0,75 | 18,75 | 0,72 | 18,00 |
| 1 | 0,40 | 10,00 | 0,37 | 9,25 |
| 10 | 0,31 | 7,75 | 0,29 | 7,25 |
| 30 | 0,26 | 6,5 | 0,24 | 6,00 |
| 60 | 0,24 | 6,00 | 0,23 | 5,75 |
| 90 | 0,23 | 5,75 | 0,22 | 5,50 |

Der Stromfluss zwischen Zinkanode und Stahlnetzkathode stabilisiert sich analog zu der in Beispiel 1 beschriebenen auf die ionenleitfähige Beschichtung aufgeklebten Zinkanode nach ca. 30 Tagen. Wie in Beispiel 1 wurde keine Erhöhung des Elektrolytwiderstandes auf Grund der Passivierung der Zinkanode beobachtet. Nach 30 und 90 Tagen wurde der Potentialabfall der Stahlbewehrung gegenüber einer CSE-Elektrode nach der Unterbrechung des Stromflusses zwischen Zinkanode und Stahlnetz nach EN 12696 bestimmt. Die 24 Stunden nach der Unterbrechung des Stromflusses gemessenen Werte lagen für Platte 1 mit 195 mV und 162 mV und für Platte 2 mit 157 mV und 136 mV deutlich oberhalb des in der EN 12696 vorgegebenen Kriteriums von 100 mV. Das Stahlgitter war somit deutlich vor Korrosion geschützt. Das Beispiel zeigt, dass mit der galvanischen Anode die Stahlbewehrung auch in stark durchfeuchteten Bauteilen vor Korrosion geschützt werden kann, im Unterschied zu dem galvanischen Anodensystem, bei dem die Zinkfolie, versehen mit einer klebenden Hydrogelschicht (EP 0 668 373), sich von dem Betonuntergrund infolge der Wasseraufnahme durch das Hydrogel lösen würde.

### BEISPIEL 4

Es wurde wie in Beispiel 1 beschrieben, eine Mörtelprüfplatte hergestellt.

Für die Herstellung des ionenleitfähigen Beschichtungsmittels wurden die in Tabelle 7 aufgelisteten Komponenten in einem Zwangsmischer durch Rühren vermischt.

100 g des so hergestellten Beschichtungsmittels wurden mittels Roller auf die Mörtelprüfplatte aufgetragen. Nach ca. 2 Stunden, nachdem die Dispersion auf den Mörtelprüfplatten steif wurde und zu erhärten begann, wurde eine Zinkfolie (Durchmesser 0,25 mm) aufgeklebt und mit einem Tapetenroller auf die Beschichtung aufgepresst.

Spannungs-, Strommessung und Lagerung der Prüfkörper erfolgte wie in Beispiel 1 beschrieben.

Die über einen Zeitraum von 90 Tagen gemessenen Werte des Stromflusses zwischen Zinkanode und Stahlnetz sind in Tabelle 8 zusammengefasst.

| **Tabelle 7:** | Gewichts-Teile |
|---|---|
| Poly-Butyl-Methylmetacrylat | 550 |
| Isotridecanolethoxylat | 6 |
| Natriumpolyacrylat | 11 |
| Lithiumchlorid | 10 |
| 8-Hydroxychinolin | 20 |
| Glyzerin | 60 |
| Polyglykol MW 600 | 30 |
| Kalksteinmehl < 30 µm | 265 |
| Aerosil | 15 |
| Deonisiertes Wasser | 13 |
| Polyacrylsäure-Polyamid-Copolymer | 20 |
| Summe | 1000 |

**Tabelle 8**

| Zeit in Tagen | gemessener Stromfluss [mA] | Stromfluss/m² [mA/m²] |
|---|---|---|
| 0 | 0,69 | 17,25 |
| 1 | 0,45 | 11,25 |
| 10 | 0,39 | 9,75 |
| 30 | 0,28 | 7,00 |
| 60 | 0,26 | 6,50 |
| 90 | 0,25 | 6,25 |

Die Beispiele zeigen, dass mit der galvanischen Anode die Stahlbewehrung in Betonbauteilen verlässlich und dauerhaft vor Korrosion geschützt werden kann. Im Unterschied zu der mit einer Hydrogelschicht versehenen Zinkfolie (EP 0 668 373) ist das ionenleitfähige Beschichtungsmittel kostengünstig und einfach herzustellen und anwendbar und vor allem nahezu unbegrenzt lagerfähig. Zudem können mit dem galvanischen Anodensystem die Stahlbewehrung auch in stark durchfeuchteten Bauteilen verlässlich und dauerhaft vor Korrosion geschützt werden.

## Patentansprüche

1. Verfahren zur Herstellung eines Galvanischen Anodensystems, wobei das Verfahren umfasst:
Aufbringen einer ionenleitfähigen Beschichtung auf eine Betonoberfläche, Aufbringen eines galvanischen Anodenmaterials auf die ionenleitfähige Beschichtung oder Einbetten eines galvanischen Anodenmaterials in die ionenleitfähige Beschichtung, und
Trocknen und Aushärten der ionenleitfähigen Beschichtung um das Galvanische Anodensystem zu bilden.

2. Verfahren nach Anspruch 1 **dadurch gekennzeichnet, dass** die ionenleitfähige Beschichtung als streich- und/oder spitzfähige Dispersion und/oder Suspension aufgebracht wird.

3. Verfahren nach Anspruch 1 oder 2 **dadurch gekennzeichnet, dass** das galvanische Anodenmaterial ausgewählt ist aus Zink, Aluminium, Magnesium und/oder deren Legierungen.

4. Verfahren nach einem der Ansprüche 1 bis 3, wobei das Anodenmaterial aus einem Netz oder Gitter besteht.

5. Verfahren nach einem der Ansprüche 1 bis 4 **dadurch gekennzeichnet, dass** die ionenleitfähige Beschichtung Polyelektrolyten enthält, die mit dem Anodenmaterial Komplexverbindungen bilden.

6. Verfahren nach einem der Ansprüche 1 bis 5 **dadurch gekennzeichnet, dass** der Polyelektrolyt aus EDTA, Imminodiessigsäure, Aminophosphonsäuren, Hydroxychinolin oder deren Salze, insbesondere Alkalisalze, ausgewählt ist.

7. Verfahren nach einem der Ansprüche 1 bis 6, **dadurch gekennzeichnet, dass** der ionenleitfähigen Beschichtung Kunstharzdispersionen, insbesondere ausgewählt aus Polyacrylate, Polystyrol, Butadien-Styrolcopolymere, Polyether, Polyketone, Latex carboxylierte Styrol-Butadien-Copolymere, Phenolharze, Epoxyharze oder Chloropren, beigemengt werden.

8. Verfahren nach einem der Ansprüche 1 bis 7, **dadurch gekennzeichnet, dass** die ionenleitfähige Beschichtung durch Rollen, Spritzen, Spachteln auf die Betonoberfläche, aufgetragen wird.

9. Verfahren nach einem der Ansprüche 1 bis 8 **dadurch gekennzeichnet, dass** vor Aufbringen der ionenleitfähigen Beschichtung die Betonoberfläche, insbesondere durch Sand-, Schlacken-, Feuchtschlacken- oder Hochdruck-Strahlen, aufgeraut wird.

10. Verfahren nach einem der Ansprüche 1 bis 9, **dadurch gekennzeichnet, dass** das Anodenmaterial beim Auftragen der ionenleitfähigen Beschichtung aufgetragen oder eingebettet wird.

11. Verfahren nach einem der Ansprüche 1 bis 9, **dadurch gekennzeichnet, dass** das Anodenmaterial in eine zweite Schicht der ionenleitfähigen Beschichtung aufgetragen oder eingebettet wird.

12. Verfahren nach einem der Ansprüche 1 bis 9, **dadurch gekennzeichnet, dass** das Anodenmaterial mechanisch auf der ionenleitfähigen Beschichtung fixiert wird.

13. Verfahren nach Anspruch 12 **dadurch gekennzeichnet, dass** die mechanische Fixierung durch Dübel, Nägel oder Schrauben vermittelt wird.

14. Verfahren nach einem der Ansprüche 1 bis 9, **dadurch gekennzeichnet, dass** das Anodenmaterial durch thermisches Sprayen, insbesondere Flammensprayen oder Plasmasprayen, aufgetragen wird.

## Claims

1. A method for production of a galvanic anode system, the method comprising:
applying an ion-conductive coating onto a concrete surface;
applying a galvanic anode material onto the ion-conductive coating or embedding a galvanic anode material into the ion-conductive coating; and
drying; and
curing the ion-conductive coating to form the galvanic anode system.

2. The method according to Claim 1, **characterized in that** the ion-conductive coating is applied as a spreadable and/or sprayable dispersion and/or suspension.

3. The method according to Claim 1 or 2, **characterized in that** the galvanic anode material is selected from zinc, aluminum, magnesium and/or alloys thereof.

4. The method according to one of the Claims 1 to 3, wherein the anode material consists of a meshwork or grid.

5. The method according to one of the Claims 1 to 4, **characterized in that** the ion-conductive coating contains polyelectrolytes which form complex compounds with the anode material.

6. The method according to one of the Claims 1 to 5, **characterized in that** the polyelectrolyte is selected from EDTA, iminodiacetic acid, aminophosphonic acids, hydroxyquinoline or salts thereof, especially alkali salts.

7. The method according to one of the Claims 1 to 6, **characterized in that** synthetic resin dispersions, especially selected from polyacrylates, polystyrene, butadiene styrene copolymers, polyethers, polyketones, latex carboxylated styrene butadiene copolymers, phenolic resins, epoxy resins, or chloroprene, are mixed into the ion-conductive coating.

8. The method according to one of the Claims 1 to 7, **characterized in that** the ion-conductive coating is applied to the concrete surface by rolling, spraying or filling.

9. The method according to one of the Claims 1 to 8, **characterized in that**, prior to applying the ion-conductive coating, the concrete surface is roughened especially by sand blasting, slag blasting, moist slag blasting or high-pressure jets.

10. The method according to one of the Claims 1 to 9, **characterized in that** the anode material is applied or embedded when applying the ion-conductive coating.

11. The method according to one of the Claims 1 to 9, **characterized in that** the anode material is applied or embedded in a second layer of the ion-conductive coating.

12. The method according to one of the Claims 1 to 9, **characterized in that** the anode material is mechanically fixed on the ion-conductive coating.

13. The method according to Claim 12, **characterized in that** the mechanical fixing is mediated by dowels, nails or screws.

14. The method according to one of the Claims 1 to 9, **characterized in that** the anode material is applied by thermal spraying, especially flame spraying or plasma spraying.

## Revendications

1. Procédé pour la réalisation d'un système d'anode galvanique, ledit procédé incluant les étapes consistant à :
appliquer un revêtement capable de conduire des ions sur une surface de béton, appliquer un matériau d'anode galvanique sur le revêtement capable de conduire les ions ou noyer un matériau d'anode galvanique dans le revêtement capable de conduire des ions, et
faire sécher et durcir le revêtement capable de conduire des ions pour former le système d'anode galvanique.

2. Procédé selon la revendication 1, **caractérisé en ce que** le revêtement capable de conduire les ions est appliqué sous forme de dispersion et/ou de suspension capable d'être étalée et ou d'être projetée.

3. Procédé selon la revendication 1 ou 2, **caractérisé en ce que** le matériau d'anode galvanique est sélectionné parmi zinc, aluminium, magnésium et/ou leurs alliages.

4. Procédé selon l'une des revendications 1 à 3, dans lequel le matériau d'anode est formé d'un réseau ou d'un grillage.

5. Procédé selon l'une des revendications 1 à 4, **caractérisé en ce que** le revêtement capable de conduire les ions contient des polyélectrolytes, qui forment des liaisons complexes avec le matériau d'anode.

6. Procédé selon l'une des revendications 1 à 5, **caractérisé en ce que** le polyélectrolyte est sélectionné parmi EDTA, acide iminodiacétique, acides amino phosphoniques, hydroxy-quinoléine ou leurs sels, en particulier leurs sels alcalins.

7. Procédé selon l'une des revendications 1 à 6, **caractérisé en ce que** l'on mélange au revêtement capable de conduire les ions des dispersions de résine synthétique, en particulier sélectionnées parmi polyacrylates, polystyrènes, copolymères butadiène-styrène, polyéther, polycétone, copolymères styrène-butadiène carboxylés au latex, résines phénoliques, résines époxy ou chloroprène.

8. Procédé selon l'une des revendications 1 à 7, **caractérisé en ce que** le revêtement capable de conduire les ions est appliqué au rouleau, par projection, par lissage sur la surface de béton.

9. Procédé selon l'une des revendications huit, **caractérisé en ce que**, avant l'application du revêtement capable de conduire les ions, la surface de béton est rendue rugueuse, en particulier par projection de sable, de scories, de scories humides ou par projection sous haute pression.

10. Procédé selon l'une des revendications 1 à 9, **caractérisé en ce que** le matériau d'anode est appliqué ou noyé lors de l'application du revêtement capable de conduire les ions.

11. Procédé selon l'une des revendications 1 à 9, **caractérisé en ce que** le matériau d'anode est appliqué ou noyé dans une deuxième couche de revêtement capable de conduire les ions.

12. Procédé selon l'une des revendications 1 à 9, **caractérisé en ce que** le matériau d'anode est fixé par voie mécanique sur le revêtement capable de conduire les ions.

13. Procédé selon la revendication 12, **caractérisé en ce que** la fixation mécanique est assurée par des chevilles, des clous ou des vis.

14. Procédé selon l'une des revendications 1 à 9, **caractérisé en ce que** le matériau d'anode est appliqué par pulvérisation thermique, en particulier par pulvérisation à la flamme ou pulvérisation au plasma.
